# EUROPÄISCHE PATENTANMELDUNG

(11) **EP 2 354 589 A2**
(43) Veröffentlichungstag der Anmeldung: **10.08.2011**
(21) Anmeldenummer: 11150690.3
(22) Anmeldetag: 12.01.2011
(51) Int. Cl.: F16F 9/46

(54) **Verstellbares Dämpfventil**

(30) Priorität: 28.01.2010 DE 102010001302
(71) Anmelder: ZF Friedrichshafen AG, 88038 Friedrichshafen (DE)
(72) Erfinder: Callies, Lothar, 87490, Poppenhausen (DE); Schaffelhofer, Timo, 87688, Bad Kissingen (DE)

(57) **Zusammenfassung**

Verstellbares Dämpfventil (1) für einen Schwingungsdämpfer, umfassend ein Gehäuse (3) mit einer Stufenöffnung (13), in dem ein Ventilkörper (9) über eine Führungshülse (17) und einem radial nach außen gerichteten Absatz (15) axial beweglich geführt ist, wobei der Ventilkörper in Richtung einer Ventilsitzfläche (7) innerhalb einer Kontaktfläche zwischen dem Ventilkörper und der Ventilsitzfläche eine in Abhubrichtung des Ventilkörpers wirksame druckbeaufschlagte Fläche A_{ÖD} aufweist, die von einer Durchgangsöffnung (25) innerhalb eines von einer Ventilsitzfläche begrenzten Querschnitts mit Dämpfmedium angeströmt wird, und von einer Rückseite des Ventilkörpers eine mit dem Durchmesser der Führungshülse (17) wirksame in Schließrichtung druckbeaufschlagte Fläche A_{SchließD} gebildet wird, die an einen mit Druckmedium gefüllten Steuerraum angeschlossen ist, der über mindestens eine Verbindungsöffnung (19) an die Durchgangsöffnung (25) angeschlossen ist, wobei auf den Ventilkörper eine resultierende Kraft, umfassend eine Kraft mindestens einer Ventilfeder (11) und eine Stellkraft eines Aktuators (21,23) und einer Druckkraft im Steuerraum wirkt, wobei bei einer Anströmung des Ventilkörpers über die Durchgangsöffnung in Öffnungsrichtung des Ventilkörpers eine zusätzliche Fläche A_{SchließD2} des Ventilkörpers mit Dämpfmedium druckbeaufschlagt wird, wobei die zusätzliche druckbeaufschlagte Fläche A_{SchließD2} über mindestens eine Kanalverbindung (37,41) mit der Durchgangsöffnung verbunden ist und im Strömungsweg ausgehend von der Durchgangsöffnung zum Steuerraum (53) ein die Schließposition einnehmendes Rückschlagventil (51) angeordnet, wobei zusätzlich zur Verbindungsöffnung zwischen der Durchgangsöffnung und dem Steuerraum ein hydraulisch parallel geschalteter Ventilkanal (57) besteht, dessen Durchtrittsquerschnitt von dem Aktuator beeinflusst wird.

## Beschreibung

Die Erfindung betrifft ein verstellbares Dämpfventil gemäß dem Oberbegriff von Patentanspruch 1.

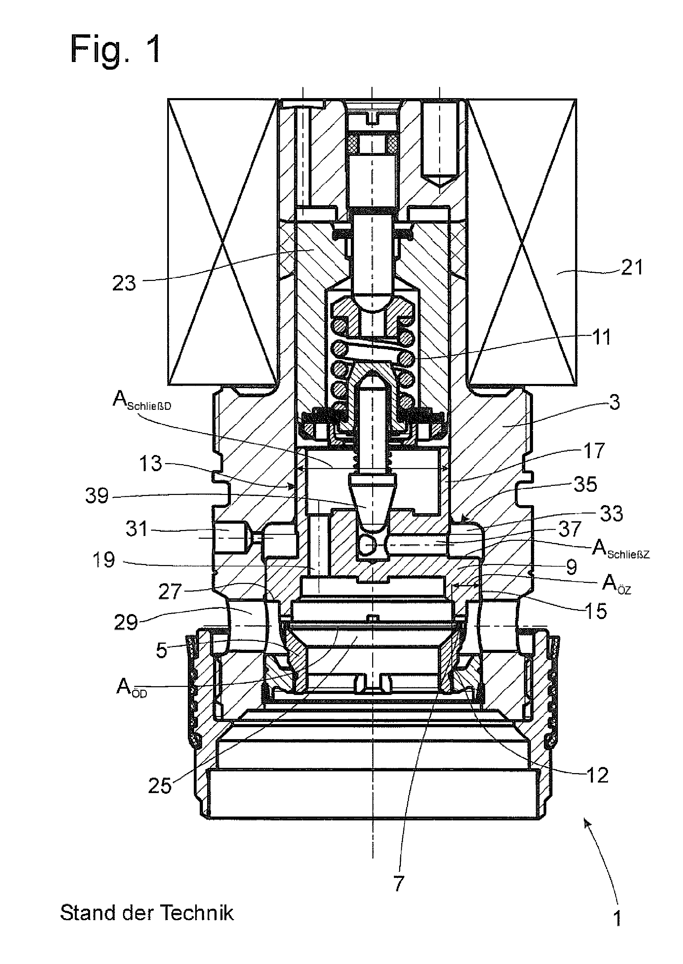

Die Figur 1 zeigt ein verstellbares Dämpfventil 1 für einen Schwingungsdämpfer in einer an einer Kolbenstange befestigbaren Variante als Stand der Technik, wie z. B. in der DE 198 22 448 A1 offenbart. Das Dämpfventil 1 umfasst ein Gehäuse 3 mit einem in Grenzen axial beweglichen Ventilsitzring 5. Auf einer Ventilsitzfläche 7 des Ventilsitzrings wird ein axial beweglicher Ventilkörper 9 mittels einer Ventilfeder 11 in Schließrichtung vorgespannt. Dabei stützt sich der Ventilsitzring 5 mit seiner konischen Ventilfläche auf einer gehäuseseitigen Ventilsitzfläche 12 ab. Der Ventilkörper 9 kann in einer Stufenöffnung 13 des Gehäuses 3 axial gleiten und weist selbst eine äußere Kontur mit einem Absatz 15 zu einer Führungshülse 17 auf. Mindestens eine exzentrische Verbindungsöffnung 19 verbindet eine in Richtung der Ventilsitzfläche 7 weisende Unterseite mit einer Rückseite des Ventilkörpers 9. Dadurch stehen bei einer Anströmung des Ventilkörpers durch den Ventilsitzring 5 zwei druckbeaufschlagte Flächen am Ventilkörper 9 zur Verfügung. Eine auf den Ventilkörper 9 in Abhubrichtung wirksame druckbeaufschlagte Fläche AOD wird von dem Kontaktfläeileninnendurchmesser des Ventilkörpers 9 auf der Ventilsitzfläche 7 bestimmt. Der Ventilring 5 verbleibt in der dargestellten Position, da die Fläche AOD größer ist als der Durchmesser der Ventilsitzfläche 12. In Schließrichtung des Ventilkörpers 9 wirkt eine Druckkraft über die projizierte Fläche AschlieβD mit dem Durchmesser der Führungshülse 17 und dem Druck pö der Unterseite. Die Rückseite des Ventilkörpers wird mit Dämpfmedium beaufschlagt, um einen Druckkraftausgleich zu erreichen und dadurch den Ventilkörper mit einem geringen Energieeinsatz bewegen zu können. Die druckbeaufschlagte Fläche AöD ist geringfügig größer als die Fläche AschließD, wobei in der Differenz Fertigungsabweichungen einkalkuliert sind, damit der Ventilkörper bei voll wirksamer Federkraft definiert mit geringer Kraft abheben kann. Das Dämpfmedium kann aus dem rückwärtigen Raum zwischen dem Ventilkörper 9 und dem Gehäuse 3 nicht abfließen, da der Ventilstößel 39 bei einer Anströmung der Unterseite des Ventilkörpers 9 den Zustrom in die Radialkanäle 37 durch die permanente Anlage am Ventilkörper verschließt.

Über eine Spule 21 in Verbindung mit einer Ankerhülse 23 kann eine Magnetkraft eingestellt werden, die der Federkraft der Ventilfeder 11 entgegengerichtet wirkt. Bei einer Anströmung des Ventilkörpers 9 über eine Durchgangsöffnung 25 des Ventilsitzringes 5 wird die größte Dämpfkraft erreicht, wenn die Magnetkraft gleich Null ist und die volle Federkraft der Ventilfeder 11 in Schließrichtung des Ventilkörpers 9 zur Verfügung steht. Dann ist für die Abhubbewegung des Ventilkörpers 9 ein besonders großer Öffnungsdruck pö an der Unterseite des Ventilkörpers 9 notwendig.

Bei maximaler Bestromung der Spule 21 kompensiert die Magnetkraft die Federkraft der Ventilfeder 11 zumindest teilweise, so dass schon bei einem deutlich kleineren Druck pö an der Fläche AöD eine Abhubbewegung des Ventilkörpers 9 einsetzt. Eine Dämpfkraftverstellung ist also nur im Rahmen der Kompensation der Federkraft der Ventilfeder 11 möglich.

Der Ventilkörper 9 verfügt für eine zweite Anströmungsrichtung über eine zweite in Öffnungsrichtung druckbeaufschlagte ringförmige Fläche Aöz, die vom Außendurchmesser im Bereich einer Stufe 27 des Ventilkörpers 9 und dem Außendurchmesser der Kontaktfläche des Ventilrings 5 auf der gehäuseseitigen Ventilsitzfläche 12 bestimmt wird. Bei einer Anströmung des Ventilkörpers 9 und des Ventilsitzrings 5 über mindestens eine radiale Öffnung 29 im Gehäuse 3 wirkt auf die ringförmige Fläche Aöz eine Abhubkraft gegen die Federkraft der Ventilfeder 11 und einer ringförmigen druckbeaufschlagten Fläche Aschiließz am Absatz 15 des Ventilkörpers 9, die über einen parallelen Kanal 31 mit Druckmedium versorgt wird und in Schließrichtung wirkt. Durch den Kanal 31 kann Dämpfmedium über einen Ringraum 33 zwischen dem Absatz 15 und der Stufe 35 im Gehäuse 3 in Radialkanäle 37 des Ventilkörpers 9 einströmen und auf einen von der Ventilfeder 11 vorgespannten Ventilstößel 39 einwirken. Der Druck auf den Ventilstößel 39 wirkt als Öffnungskraft auf den Ventilstößel 39 und als zusätzliche Schließkraft für den Ventilkörper 9, so dass sich der Ventilstößel ggf. leicht vom Ventilkörper abhebt. Bei einer Bestromung der Spule 21 hebt der Ventilstößel 39 unter Bildung eines Ringspalts geringfügig vom Ventilkörper 9 ab. Der Querschnitt der mindestens einen Verbindungsöffnung 19 ist jedoch deutlich größer als der vorliegende Ringspalt, so dass sich an der Rückseite des Ventilkörpers nur ein verminderter Druck aufbauen kann, der eine Schließkraft auf den Ventilkörpers 9 ausübt.

In der Durchlassposition des Dämpfventils kann das Dämpfmedium über die radialen Kanäle 29 durch den Spalt zwischen dem Ventilsitzring 5 und der gehäuseseitigen Ventilsitzfläche 12 überströmen. Wie aus der Beschreibung ersichtlich ist, sind die druckbeaufschlagten Flächen Ao und Aschlieβ unabhängig voneinander, d. h. wenn man z. B. die Fläche Aschließz am Absatz 15 vergrößern würde, hätte diese Maßnahme keinen Einfluss auf die Größe der druckbeaufschlagten Fläche AöD.

Das Verhältnis von maximaler Dämpfkraft/minimaler Dämpfkraft wird als Spreizung der Dämpfkraftkennlinien des verstellbaren Dämpfventils bezeichnet. In der Praxis hat sich herausgestellt, dass die Kennlinienspreizung größer sein sollte, als bisher. Eine ganz einfache Möglichkeit könnte darin bestehen, dass man eine deutlich höher vorgespannte Ventilfeder verwendet. Eine derartige Ventilfederausfegung hätte jedoch zur Folge, dass auch die notwendige Öffnungskraft bei einer von radial außen erfolgenden Anströmung des Ventilkörpers ansteigen würde. Dieses Betriebsverhalten ist jedoch nicht erwünscht.

In der älteren DE 10 2008 041 735 wird ein gattungsbildendes verstellbares Dämpfventil vorgeschlagen, das für die Verstellbarkeit in der Zugstufe ein Rückschlagventil im Ventilkörper verwendet. Das Rückschlagventil verschließt den direkten Abfluss des Dämpfmediums aus dem Raum mit der Fläche AschließZ in Richtung der Durchgangsöffnung 25. Bei einer Anströmung des Ventilkörpers ausgehend von der Durchgangsöffnung 25 auf den Ventilkörper öffnet das Rückschlagventil. Des Weiteren kann Dämpfmedium über die Verbindungsöffnung im Ventilkörper auf in den Rückraum des Ventilkörpers mit der Fläche AschließD fließen. Trotzdem ist die Verstellbarkeit des Dämpfventils bei einer Anströmung ebenso wie bereits aus dem vorstehend beschriebenen Stand der Technik lediglich von der Kompensation der Kraft der Ventilfeder abhängig bzw. durch sie begrenzt.

Die Aufgabe der vorliegenden Erfindung besteht darin, den Verstellbereich des Dämpfventils im Fall einer Anströmung über die Durchgangsöffnung zu vergrößern.

Erfindungsgemäß wird die Aufgabe dadurch gelöst, dass bei einer Anströmung des Ventilkörpers über die Durchgangsöffnung in Öffnungsrichtung des Ventilkörpers eine zusätzliche Fläche ASchließD2 des Ventilkörpers mit Dämpfmedium druckbeaufschlagt wird, wobei die zusätzliche druckbeaufschlagte Fläche ASchließD2 über mindestens eine Kanalverbindung mit der Durchgangsöffnung verbunden ist und im Strömungsweg ausgehend von der Durchgangsöffnung zum Steuerraum ein die Schließposition einnehmendes Rückschlagventil angeordnet, wobei zusätzlich zur Verbindungsöffnung zwischen der Durchgangsöffnung und dem Steuerraum ein hydraulisch parallel geschalteter Ventilkanal besteht, dessen Durchtrittsquerschnitt von dem Aktuator beeinflusst wird.

Sowohl bei einer Ein- wie auch bei einer Ausfahrbewegung der Kolbenstange steht die Druckkraftkomponente im Steuerraum als Schließkraft für den Ventilkörper zur Verfügung. Dieser zusätzliche Kraftanteil kann dazu verwendet werden, die Dämpfkraft bei kleinen Kolbenstangenbewegungen, die von der Ventilfeder bestimmt wird, abzusenken, da für größere Dämpfkräfte der hydraulische Kraftanteil im Steuerraum wirksam ist.

Im Hinblick auf eine einfache und insgesamt kompakte Bauweise stellt der Ventilkanal eine Verlängerung der Kanalverbindung dar.

Vorteilhafterweise ist der Steuerraum an einen Abflusskanal angeschlossen ist, der mit einem Rückschlagventil bestückt ist, das ausgehend von einer Anströmung aus Steuerraum in Abflussrichtung öffnet. Zwischen der Durchgangsöffnung und dem Steuerraum lässt sich einerseits ein deutliches Druckgefälle realisieren und andererseits wird ein hydraulischer Kurzschluss im verstellbaren Dämpfventil verhindert.

Im Hinblick auf eine einfache konstruktive Ausgestaltung wird das Rückschlagventil von einem Dichtband gebildet, das eine Austrittsöffnung des Abflusskanals abdeckt. Als weitere Maßnahme für einen einfachen Aufbau des verstellbaren Dämpfventil ist vorgesehen, dass das Rückschlagventil am Ventilkörper angeordnet ist.

Um einen möglichst geringen axialen Bauraum ausführen zu müssen, wir das Rückschlagventil von einer Ventilscheibe gebildet wird.

Die Ventilscheibe des Rückschlagventils mit einer definierten Schließkraft vorgespannt wird. Der damit verbundene Gegendruck führt zu einem günstigen Betriebsverhalten des Ventilkörpers.

In weiterer vorteilhafter Ausgestaltung ist die Austrittsöffnung des Abflusskanals axial beabstandet zur Anschlussöffnung der Kanalverbindung. Mit dieser Maßnahme wird die Verwendung eines Dichtbandes als Rückschlagventil vereinfacht.

Anhand der folgenden Figurenbeschreibung soll die Erfindung näher erläutert werden.

Es zeigt:
Fig. 1 Stand der Technik
Fig. 2
Fig. 3

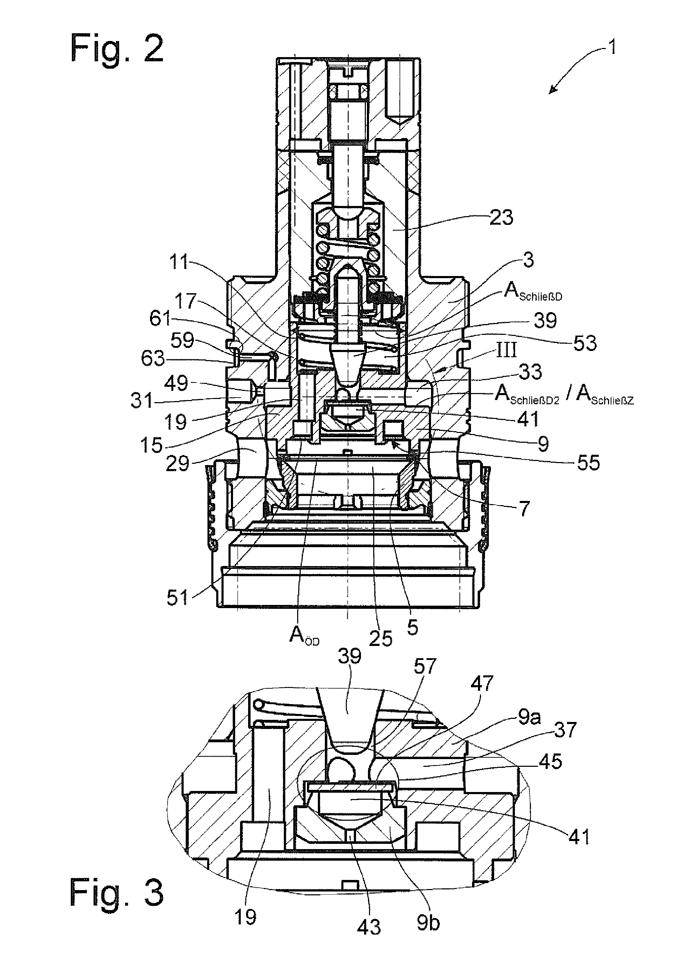

Die Fig. 2 in Verbindung mit der Fig. 3 zeigt ein erfindungsgemäßes Dämpfventils 1, das auf der Konstruktion nach Fig. 1 aufbaut. Im beschriebenen Stand der Technik steht als druckbeaufschlagte Fläche AoD in Öffnungsrichtung bei einer Anströmung über die Durchgangsöffnung 25 die Unterseite des Ventilkörpers 9 zur Verfügung. In Schließrichtung wirkt bei der besagten Anströmungsrichtung nur die Fläche AschließD an der Rückseite des Ventilkörpers im Bereich der Führungshülse 17 auf den Ventilkörper 9. In der Fig. 2 wird eine zusätzliche Fläche des Ventilkörpers 9 in Schließrichtung mit Dämpfmedium beaufschlagt. Die zusätzlich druckbeaufschlagte Fläche ASchließD2 wird von dem radial nach außen weisenden Absatz 15 des Ventilkörpers 9 gebildet, also von derselben druckbeaufschlagten Fläche, die bei einer Anströmung über die radialen Kanäle 31 im Gehäuse 3 wirksam ist. Die für diese Anströmrichtung zusätzliche druckbeaufschlagte Fläche AschließD2 ist über eine Kanalverbindung 41 im Ventilkörper 9 mit der Durchgangsöffnung 25 verbunden. Wie insbesondere in der Fig. 3 ersichtlich ist, ist innerhalb der Kanalverbindung 41 eine Drosselstelle 43 ausgeführt. Die Kanalverbindung 41 weist ein in Strömungsrichtung zur Durchgangsöffnung 25 schließendes Rückschlagventil 45 auf. Das Rückschlagventil 45 wird von einer axial beweglichen Rückschlagventilscheibe 47 gebildet, die zwischen zwei geschichteten Bauteilen 9a; 9b des Ventilkörpers 9 axial beweglich angeordnet ist und einen Querschnitt der Kanalverbindung 41 steuert.

Der Absatz 15 des Ventilkörpers 9 und die Stufenöffnung 13 des Gehäuses 3 bilden den Ringraum 33, dessen Zu- und Abfluss mit einer weiteren Drosselstelle 49 bestückt ist. Alternativ zum Rückschlagventil 45 kann man auch eine Drosselstelle 43 vorsehen, die bevorzugt maximal den halben Querschnitt der Drosselstelle 49 aufweist.

Ein weiterer Unterschied zur Fig. 1 besteht darin, dass die 19 mit einem Rückschlagventil 51 bestückt ist, das ausgehend von der Durchgangsöffnung 25 zu einem zum Ventilkörper 9 rückseitigen Steuerraum 53, in dem die Ventilfeder 11 angeordnet ist, eine Schließposition einnimmt. Das Rückschlagventil 51 wird von mindestens einer Ventilscheibe 55 gebildet, die am Ventilkörper 9 angeordnet ist, und in Schließrichtung vom Dämpfmediumstrom innerhalb der Durchgangsöffnung 25 beaufschlagt wird. Man kann vorsehen, dass die Ventilscheibe 55 mit einer definierten Schließkraft vorgespannt wird. Zusätzlich zur Verbindungsöffnung 19 besteht ein parallel geschalteter Ventilkanal 57, dessen wirksamer Durchtrittsquerschnitt zum Steuerraum 53 vom Ventilstößel 39 als Teil des Ankers beeinflusst wird. Zwischen dem Steuerraum 53 und einem Arbeitsraum des Schwingungsdämpfers besteht ein Abflusskanal 59, der axial beabstandet zum Kanal 31 ausgeführt ist und mit einem Rückschlagventil 61 bestückt ist, das in Abflussrichtung ausgehend vom Steuerraum 53 öffnet. Das Rückschlagventil 61 wird bevorzugt von einem Dichtband 63 gebildet, das eine Austrittsöffnung des Abflusskanals 59 abdeckt. Grundsätzlich sind für das Rückschlagventil aber auch andere Bauformen möglich.

Bei einer Anströmung des Ventilkörpers 9 mit Dämpfmedium über die Durchgangsöffnung 25 wird die Fläche AöD mit dem Öffnungsdruck pö beaufschlagt. Über die exzentrische Verbindungsöffnung 19 kann bedingt durch das geschlossene Rückschlagventil 51 kein Dämpfmedium den Steuerraum 53 bzw. die Rückseite des Ventilkörpers 9 erreichen. Das Dämpfmedium strömt durch die Kanalverbindung 41 und den sich daran anschließenden Ventilkanal 57 und weiter über den mehr oder weniger großen Ringspalt am Ventilkörper 39 in den Steuerraum 53. Dabei tritt ein Druckabfall zwischen dem Druckniveau in der Durchgangsöffnung 25 und dem Steuerraum 53 auf, da Dämpfmedium über den Abflusskanal 59 entweichen kann. An der Rückseite des Ventilkörper 9 übt der Druck im Steuerraum 53 auf die Fläche ASchließD eine erste in Schließrichtung des Ventilkörpers 9 wirksame Kraft aus. Parallel dazu tritt Dämpfmedium über die Drossel in die Kanalverbindung 41 ein und durchströmt das geöffnete Rückschlagventil 45 in Richtung des Ringraums 33. Dort kann das Dämpfmedium den Absatz 15 mit der zusätzlichen Fläche ASchließD2 des Ventilkörpers 9 mit einer Druckkraft in Schließrichtung belasten, Insgesamt ist die gesamte druckbeaufschlagte Fläche am Ventilkörper in Schließrichtung größer als die Fläche Ao. Das Druckniveau auf der Fläche ASchließD2 wird vom Drosselwiderstand der Drosselstelle 43 im Ventilkörper 9 und der weiteren Drosselstelle 49 zwischen dem Ringraum 33 und dem Kanal 31 bestimmt. Die Federkraft der Ventilfeder 11 und die Magnetkraft auf den Anker 23 sind im Vergleich zur Fig. 1 unverändert geblieben. Auf den Ventilkörper 9 wirkt in Öffnungsrichtung der Druck pö innerhalb der Durchgangsöffnung 25 auf die Fläche AöD. In Schließrichtung treten die Druckkräfte auf die Fläche ASchließD mit dem Druck po und auf die Fläche AschließD2 mit einem verminderten Druck PschließD2 auf. Im Vergleich zum Stand der Technik ist bei vollwirksamer Schließkraft der Ventilfeder 11 ein durch den Anteil AschließD2 multipliziert mit dem verminderten Druck AschließD2 beschreibbarer erhöhter Öffnungsdruck po notwendig, um den Ventilkörper 9 von der Ventilsitzfläche 7 abheben zu lassen. Zusätzlich kann der Druck im Steuerraum 53 bei einer Anströmung des Ventilkörper 9 ausgehend von der Durchgangsöffnung 25 deutlicher variiert werden. Abweichend dazu ist beim Ventilkörper gemäß dem dargestellten Stand der Technik der Druck am Ventilkörper 9 durch den abgeschlossenen Steuerraum an der Ober- und an der Unterseite gleich groß. Folglich wirkt sich eine axiale Verstellbewegung des Ventilstößels auf das Druckniveau im Steuerraum nicht aus. Die erreichte Druckerhöhung im Steuerraum 53 ist proportional einer erhöhten Dämpfkraft. Bei einer im Vergleich zum Stand der Technik unveränderten Auslegung der Ventilfeder 11 und der Magnetspule 21 wird mit einer identischen Stellkraft eine deutliche größere Bandbreite der möglichen Dämpfkraftkennlinien erreicht, also die so genannte Spreizung der Dämpfkraftkennlinien erhöht.

Bei einer Anströmung des Ventilkörpers 9 über die radialen Öffnungen 29 im Gehäuse 3 ändert sich an der Dämpfkraftcharakteristik des verstellbaren Dämpfventils im Vergleich zum beschriebenen Stand der Technik nichts, da dass Rückschlagventil 45 im Ventilkörper 9 die Kanatverbindung 41 verschließt, also die identischen druckbeaufschlagten Flächen in Offnungs- und Schließrichtung wirksam sind. Das Rückschlagventil 61 an der Austrittsöffnung des Abflusskanals 59 verhindert ein Eindringen von Dämpfmedium über den Abflusskanal in den Steuerraum 53. Hingegen öffnet das Rückschlagventil 51 am Ventilkörpers 9, so dass das Dämpfmedium, das über den Radialkanal 37 und den Ringraum 33 am Ventilstößel 39 vorbei in den Steuerraum 53 eingeströmt ist, über das geöffnete Rückschlagventil 51 in die Durchgangsöffnung 25 entweichen kann. Der Dämpfventilaufbau ist trotz der weiteren druckbeaufschlagten Fläche AschließD2 bei einer Anströmung über die Durchgangsöffnung 25 so einfach, weil die druckbeaufschlagte Fläche ASchließD2 sowohl bei einer Anströmung über die Durchgangsöffnung 25 innerhalb des Ventilsitzringes 7 wie auch bei einer Anströmung über die radialen Kanäle 31 wirksam ist und keine unabhängige Fläche AschließD2 geschaffen werden musste.

Bezugszeicheinliste
- 1: Dämpfventils
- 3: Gehäuse
- 5: Ventilsitzring
- 7: Ventilsitzfläche am Ventilsitzring
- 7a: innere Ventilsitzfläche
- 7b: äußere Ventilsitzfläche
- 9: Ventilkörper
- 9a; 9b: geschichtete Bauteile des Ventilkörpers
- 11: Ventilfeder
- 12: gehäuseseitige Ventilsitzfläche
- 13: Stufenöffnung
- 15: Absatz
- 17: Führungshülse
- 19: Verbindungsöffnung
- 21: Spule
- 23: Ankerhülse
- 25: Durchgangsöffnung
- 27: Stufe
- 29: radiale Öffnungen
- 31: Kanal
- 33: Ringraum
- 35: Stufe am Gehäuse
- 37: Radialkanäle
- 39: Ventilstößel
- 41: Kanalverbindung

## Patentansprüche

1. Verstellbares Dämpfventils (1) für einen Schwingungsdämpfer, umfassend ein Gehäuse (3) mit einer Stufenöffnung (13), in dem ein Ventilkörper (9) über eine Führungshülse (17) und einem radial nach außen gerichteten Absatz (15) axial beweglich geführt ist, wobei der Ventilkörper (9) in Richtung einer Ventilsitzfläche (7) innerhalb einer Kontaktfläche zwischen dem Ventilkörper (9) und der Ventilsitzfläche (7) eine in Abhubrichtung des Ventilkörpers (9) wirksame druckbeaufschlagte Fläche AÖD aufweist, die von einer Durchgangsöffnung (25) innerhalb eines von einer Ventilsitzfläche (7) begrenzten Querschnitts mit Dämpfmedium angeströmt wird, und von einer Rückseite des Ventilkörpers (9) eine mit dem Durchmesser der Führungshülse (17) wirksame in Schließrichtung druckbeaufschlagte Fläche AschließD2 gebildet wird, die an einen mit Druckmedium gefüllten Steuerraum angeschlossen ist, der über mindestens eine Verbindungsöffnung (19) an die Durchgangsöffnung (25) angeschlossen ist, wobei auf den Ventilkörper (9) eine resultierende Kraft, umfassend eine Kraft mindestens einer Ventilfeder (11) und eine Stellkraft eines Aktuators (21; 23) und einer Druckkraft im Steuerraum wirkt,
**dadurch gekennzeichnet,**
**dass** bei einer Anströmung des Ventilkörpers (9) über die Durchgangsöffnung (25) in Öffnungsrichtung des Ventilkörpers (9) eine zusätzliche Fläche AschließD2 des Ventilkörpers (9) mit Dämpfmedium druckbeaufschlagt wird, wobei die zusätzlich druckbeaufschlagte Fläche AschließD2 über mindestens eine Kanalverbindung (37, 41) mit der Durchgangsöffnung (25) verbunden ist und im Strömungsweg ausgehend von der Durchgangsöffnung (25) zum Steuerraum (53) ein die Schließposition einnehmendes Rückschlagventil (51) angeordnet, wobei zusätzlich zur Verbindungsöffnung (19) zwischen der Durchgangsöffnung (25) und dem Steuerraum ein hydraulisch parallel geschalteter Ventilkanal (57) besteht, dessen Durchtrittsquerschnitt von dem Aktuator (39; 11; 21) beeinflusst wird.

2. Verstellbares Dämpfventil nach Anspruch 1,
**dadurch gekennzeichnet,**
**dass** der Ventilkanal (57) eine Verlängerung der Kanalverbindung (41) darstellt.

3. Verstellbares Dämpfventil nach Anspruch 1,
**dadurch gekennzeichnet,**
**dass** der Steuerraum (53) an einen Abflusskanal (59) angeschlossen ist, der mit einem Rückschlagventil (61) bestückt ist, das ausgehend von einer Anströmung aus Steuerraum (53) in Abflussrichtung öffnet.

4. Verstellbares Dämpfventil nach Anspruch 3,
**dadurch gekennzeichnet,**
**dass** das Rückschlagventil (61) von einem Dichtband (63) gebildet wird, das eine Austrittsöffnung des Abflusskanals (59) abdeckt.

5. Verstellbares Dämpfventil nach Anspruch 1,
**dadurch gekennzeichnet,**
**dass** das Rückschlagventil (51) am Ventilkörper (9) angeordnet ist.

6. Verstellbares Dämpfventil nach Anspruch 5,
**dadurch gekennzeichnet,**
**dass** das Rückschlagventil (51) von einer Ventilscheibe (55) gebildet wird.

7. Verstellbares Dämpfventil nach den Ansprüchen 1 oder 5,
**dadurch gekennzeichnet,**
**dass** die Ventilscheibe (55) des Rückschlagventils (51) mit einer definierten Schließkraft vorgespannt wird.

8. Verstellbares Dämpfventil nach Anspruch 4,
**dadurch gekennzeichnet,**
**dass** die Austrittsöffnung des Abflusskanals (59) axial beabstandet ist zur Anschlussöffnung der Kanalverbindung (31).
